# EUROPEAN PATENT APPLICATION

(11) **EP 3 726 374 A1**
(43) Date of publication of application: **21.10.2020**
(21) Application number: 18887559.5
(22) Date of filing: 13.12.2018
(51) Int. Cl.: G06F 8/65

(54) **AUTOMOBILE SOFTWARE UPGRADING METHOD**

(30) Priority: 14.12.2017 CN 201711337844
(71) Applicant: Nio Nextev Limited, Hong Kong (CN)
(72) Inventor: DAI, Chenglong, Hong Kong (CN); SHEN, Fangzhu, Hong Kong (CN)
(74) Representative: SSM Sandmair
(86) International application number: PCT/CN2018/120852
(87) International publication number: WO 2019/114787

(57) **Abstract**

Disclosed is a method for upgrading vehicle software, which comprises: downloading, from a server, an update package required for upgrading of vehicle software in a first time period (S10), and upgrading the vehicle software with the update package in a second time period (S12), wherein the first time period is determined based at least in part on the state of communication between a vehicle and the server, and the second time period is determined based at least in part on power information of the vehicle and driving information of a user. The method can ensure that the actual trip and potential trip of the user are not affected to the greatest extent, and also can help to save on power and avoid generation of safety hazards.

## Description

### Technical Field

The invention relates to the technical field of vehicle control, and more particularly to a method for upgrading vehicle software.

### Background Art

A vehicle in the prior art usually does not support on-line upgrade of vehicle software, and a user is required to drive the vehicle to a service point or to access same to a dedicated upgrade module for software upgrade. This method is time-consuming and labor-intensive, and has a low upgrade efficiency.

In addition, in terms of the selection of an upgrade time, if the vehicle software is upgraded when the power of the vehicle is insufficient to meet subsequent travel needs, upgrade failure will be almost certainly caused, which will then bring adverse effects to the driving experience of the user, and even result in safety hazards.

### Summary of the Invention

The objective of the invention is to provide a method for upgrading vehicle software, which can make it possible to find the best time to upgrade the vehicle software without affecting the user's trip.

In order to achieve the above objective, the invention provides a technical solution as follows:
A method for upgrading vehicle software, characterized by comprising: a). downloading, from a server, an update package required for upgrading of vehicle software in a first time period, and b). upgrading the vehicle software with the update package in a second time period, wherein the first time period is determined based at least in part on the state of communication between a vehicle and the server, and the second time period is determined based at least in part on power information of the vehicle and driving information of a user.

Preferably, the power information comprises: current power of the vehicle; and a power consumption rate of the vehicle.

Preferably, the driving information comprises: a vehicle usage time preference of the user; a vehicle usage plan of the user; and a driving behavior preference of the user.

Preferably, the vehicle usage plan is determined based on: a schedule of the user; a trip of the user; and meeting minutes of a meeting that the user attends.

Preferably, the vehicle usage time preference and the driving behavior preference are determined based on historical data of driving behaviors of the user.

Preferably, the second time period is determined by the server.

Preferably, in step b), said upgrading at least comprises: upgrading a first part of the vehicle software in a third time segment based on the update package at a first upgrade stage, and upgrading a second part of the vehicle software in a fourth time segment based on the update package at a second upgrade stage, wherein the third time segment and the fourth time segment are both within the second time period and do not overlap with each other.

Preferably, the third time segment and the fourth time segment are determined by the server based on monitoring of an external environment where the vehicle is located.

The invention further provides a system for upgrading vehicle software, which comprises: an update package download unit, which is configured to determine a first time period based at least in part on the state of communication between a vehicle and a server, and download, from the server, an update package required for upgrading of vehicle software during the first time period; and a software upgrade unit, which is coupled to the update package download unit, and configured to determine a second time period based at least in part on power information of the vehicle and driving information of a user, and upgrade the vehicle software with the update package during the second time period.

In the method and system for upgrading vehicle software provided in embodiments of the invention, the factors such as power information of the vehicle itself and driving information of the user are taken into consideration, and a cloud server is used to comprehensively plan the software upgrade time, which can ensure that the actual trip and potential trip of the user are not affected to the greatest extent. In addition, the method helps to save on power and avoid generation of safety hazards, thereby significantly improving the user's travel experience.

### Brief Description of the Drawings

Fig. 1 shows a schematic flowchart of a method for upgrading vehicle software, provided in a first embodiment of the invention.
Fig. 2 shows a schematic flowchart of a method for upgrading vehicle software, provided in a second embodiment of the invention.

### Detailed Description of Embodiments

In the following description, specific details are proposed to provide a thorough understanding of the invention. However, those skilled in the art would clearly know that the embodiments of the invention may be implemented even without these specific details. In the invention, reference to specific numerals may be made, for example, to "first element", "second device", etc. However, the reference to specific numerals should not be understood as having to obey their literal order, but rather as "first element" being different from "second element".

The specific details proposed in the invention are only exemplary, and the specific details may vary, but still fall within the spirit and scope of the invention. The term "coupled" is defined as indicating a direct connection to a component or an indirect connection to a component via another component.

Preferred embodiments suitable for implementing the method or system of the invention will be described below with reference to the accompanying drawings. Although each embodiment is described in terms of a single combination of method steps or system elements, it should be understood that the invention includes all possible combinations of the disclosed steps or elements. Therefore, if an embodiment includes steps or elements A, B and C, and the second embodiment includes steps or elements B and D, the invention should be considered to include other remaining combinations of steps or elements A, B, C or D, even if they are not explicitly disclosed.

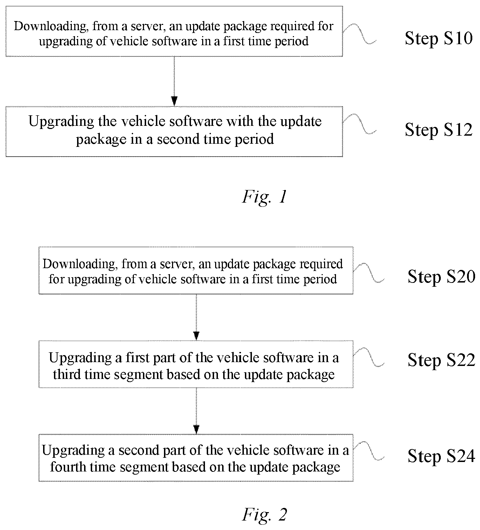

As shown in Fig. 1, a first embodiment of the invention provides a method for upgrading vehicle software, which comprises the steps as follows.

Step S 10. downloading, from a server, an update package required for upgrading of vehicle software in a first time period.

Specifically, a wireless communication connection may be adopted between a vehicle (preferably, an electric vehicle) and the server, including WIFI-based and mobile communication-based communication connections. In the case of a continuously open communication connection, the update package is transmitted from the server to the vehicle.

The first time period is determined based at least in part on the state of communication between a vehicle and the server. As an example, if a mobile communication signal is strong, the transmission of the update package may be started (start of the first time period); and if the communication signal is weak, the transmission of the update package is stopped or suspended to wait for the recovery of the signal to a better state and is then continued, until the update package is entirely transmitted (end of the first time period).

Step S12. upgrading the vehicle software with the update package in a second time period.

The second time period is determined based at least in part on power information of the vehicle and driving information of a user.

Specifically, the power information comprises: current power of the vehicle and a power consumption rate of the vehicle. Through the reporting of the current power and power consumption rate to the server from the vehicle, and in combination with the time required for installing the update package to a software operating system, the server can predict the power required for software upgrade and the remaining power of the vehicle after the completion of the upgrade. If the user subsequently has a trip schedule, it should be ensured that the user's trip will not be delayed due to insufficient remaining power. That is, only when the power is sufficient, the update package is extracted for software upgrade. Generally, before software upgrade, the current power of the vehicle should be no less than 40% of the total power, which is only an example but not limited thereto.

According to the first embodiment, the driving information of the user comprises a vehicle usage time preference of the user, a vehicle usage plan of the user, and a driving behavior preference of the user.

In terms of the vehicle usage time preference, as an example, an ordinary user usually gets home from work at 18:00-20:00, and thereafter, the electric vehicle will be parked in a parking garage until 7:00 the next morning, the user will drive to work. That is, in the time segment from 20:00 to 7:00 the next day, the user tends not to use the vehicle. For a specific user, his/her vehicle usage time preference may be different from that of the ordinary user. For example, the specific user prefers using the vehicle at 20:00-23:00 to using the vehicle at 10:00-13:00. In order to ensure that neither of the trips of the ordinary user and of the specific user will be affected, the vehicle usage time segment preferred by the user should be avoided or staggered when the vehicle software is to be upgraded, to ensure that the electric vehicle still has enough power during the use of the vehicle.

The vehicle usage plan of the user is determined based on one or more of: a schedule (or calendar) of the user; a trip of the user; and meeting minutes of a meeting that the user attends. For a business user, his/her schedule, trip and meeting minutes are often stored electronically. Furthermore, if the information is uploaded to the server set at a cloud, the cloud server may make a reasonable plan for the time segment for upgrading of vehicle software of the business user.

The "driving behavior preference" may be embodied as the driving habit developed by the user for a long term, for example, rapid acceleration or gentle acceleration, usage and adjustment range of an onboard air conditioner, user's selection for different routes, etc. It can be understood that the driving behavior preference can not only facilitate modifying the vehicle usage time preference of the user, but also have an impact on the calculation of the remaining power. In order to quantify the driving behavior preference, as an example, information, such as the ratio of the duration of the vehicle in an acceleration state to the duration thereof in a deceleration state within a certain time segment, and the adjustment range of the onboard air conditioner, may be collected through statistics to quantify the driving behavior preference of the user completely and comprehensively.

Preferably, the vehicle usage time preference and the driving behavior preference are both determined based on historical data of driving behaviors of the user. In order to save the historical data, the cloud server continuously monitors and quantifies the user's driving behaviors, and saves same in the cloud.

Based on the above-mentioned various types of user driving information, the server set at the cloud may determine the corresponding second time period for each electric vehicle to upgrade the vehicle software. Since unique "driving information" can be acquired for each user, the second time period determined by the cloud server can fully reflect the user's preference for the software upgrade time, so that the software upgrade will not affect the actual trip or potential trip of the user to the greatest extent.

As a further improvement on the first embodiment, if the upgrading of the vehicle software fails, the upgrade process of the vehicle software may be independently detected to determine the cause of upgrade failure and report the cause to the server; subsequently, the server may initiate a maintenance and detection procedure to determine the reason for upgrade failure, such as a problem with the software update package or a problem with the user's own vehicle, or incompatibility between software. In addition, the server may further suggest the user changes his/her schedule or trip. Alternatively, partial upgrade may also be selected. During the partial upgrade, the problematic part is skipped (submitted to the server for subsequent analysis), and only the normal part is upgraded.

As shown in Fig. 2, a second embodiment of the invention provides an improved method for upgrading vehicle software, which comprises three steps as follows.

Step S20. downloading, from a cloud server, an update package required for upgrading of vehicle software within a first time period.

Step S22. upgrading a first part of the vehicle software in a third time segment based on the update package at a first upgrade stage.

Step S24. upgrading a second part of the vehicle software in a fourth time segment based on the update package at a second upgrade stage.

In the second embodiment, the third time segment and the fourth time segment are both within the second time period and do not overlap with each other.

As an improvement on the first embodiment, the second embodiment adopts a "partial upgrade" manner to ensure that: the demand of a user's trip for power of an electric vehicle is preferentially met when the user's actual or potential trip is in conflict with or is not compatible with a software upgrade process over a long period of time, while the updated part of the software is provided to the user as much as possible.

As an example, the downloaded update package includes an update of a transmission control program and an update of an interactive operation interface. In the third time segment (for example, before the user starts a trip), only the first part is upgraded so that the transmission control program is upgraded to the latest version, which facilitates improving the safety of the electric vehicle; and in the fourth segment (after the completion of the user's trip), the second part is then upgraded so that the interactive operation interface on the electric vehicle is updated to the latest mode. Although the third time segment and the fourth time segment may overlap or be adjacent, it could be understood that it is a more preferred embodiment of the invention that the third time segment and the fourth time segment do not overlap with each other. As another example, a software part of the vehicle software that concerns driving safety and a software part thereof that does not concern driving safety are respectively upgraded in two or more different time segments within the second time period. The software part that concerns driving safety may be preferentially upgraded.

As a further improvement, the third time segment and the fourth time segment are determined by the server based on monitoring of an external environment where the vehicle is located.

Preferably, the external environment may comprise a geographical environment and a traffic condition. The geographical environment can reflect the area, temperature environment, and humidity environment where the user's vehicle is located. For example, when the vehicle is in a city, even if vehicle failure is caused due to the failure of software upgrade (although this situation rarely occurs), the user's vehicle can be quickly repaired; however, when the user's vehicle is in the desert, it cannot be quickly repaired. According to the above-mentioned second embodiment, the cloud server may delay both the third time segment and the fourth time segment in this case. In addition, different temperature environments and humidity environments may also have significant impacts on the power consumption rate of the electric vehicle.

On the other hand, the "traffic condition" represents information such as whether the current road is congested and whether there are vacancies in the parking lot. It is necessary to take these factors into consideration during the selection of the software upgrade time.

In view of this, the cloud server may learn about the geographical environment where the electric vehicle is located through a positioning system and the traffic condition through an urban traffic monitoring system, and then make a comprehensive plan for the upgrade time of the vehicle software more reasonably.

Through the comprehensive planning, the upgrading of the vehicle software almost hardly fails, and the upgrading of the software can be completed even when the upgrade process is not evident to the user (but the user knows the upgrade information), so that the user's travel experience will be significantly improved.

In some embodiments of the invention, the server may be implemented by using a group of distributed computing devices connected to a communication network, or implemented based on a "cloud". In such a system, the plurality of computing devices cooperate to provide services by using their shared resources.

The implementation based on a "cloud" may provide one or more advantages, including: openness, flexibility and extendibility, central management, reliability, scalability, optimization of computing resources, ability to aggregate and analyze information across multiple users, connection across multiple geographical regions, and ability to use multiple mobile or data network operators for network connectivity.

According to another embodiment of the invention, a system for upgrading vehicle software is provided, the system comprising an update package download unit and a software upgrade unit.

Specifically, the update package download unit is configured to determine a first time period based at least in part on the state of communication between a vehicle and a server, and then download, from the server, an update package required for upgrading of vehicle software during the first time period.

The software upgrade unit is coupled to the update package download unit, and is configured to determine a second time period (which is not determined by a cloud server) based at least in part on power information of the vehicle and driving information of a user, and then upgrade the vehicle software directly with the downloaded update package during the second time period. The power information comprises current power of the vehicle and a power consumption rate of the vehicle, and the driving information of the user may comprise a vehicle usage time preference, a vehicle usage plan, and an (optional) driving behavior preference of the user. The vehicle usage time preference and the vehicle usage plan may be recorded on a local end of the vehicle, and the driving behavior preference may be acquired from the cloud server.

More preferably, the software upgrade unit may upgrade the vehicle software at different times. For example, a first software part that concerns driving safety is first upgraded in a third time segment within the second time period, and a second software part that does not concern driving safety is then upgraded in a subsequent fourth time segment within the second time period.

According to another embodiment of the invention, a computer storage medium having a batch of computer executable instructions stored thereon is provided, wherein these computer executable instructions will be able to implement, when executed by a processor, the methods provided in the above-mentioned first or second embodiment.

According to still another embodiment of the invention, a controller is provided, wherein the controller will carry out, when executing executable instructions stored in a memory coupled thereto, the steps of the method provided in the first embodiment or the second embodiment.

The foregoing description is only provided for preferred embodiments of the invention, and is not intended to limit the scope of protection of the invention. Those skilled in the art may make various variation designs without departing from the concept and appended claims of the invention.

## Claims

1. A method for upgrading vehicle software, **characterized by** comprising:
a). downloading, from a server, an update package required for upgrading of vehicle software in a first time period, and
b). upgrading the vehicle software with the update package in a second time period,
wherein the first time period is determined based at least in part on the state of communication between a vehicle and the server, and the second time period is determined based at least in part on power information of the vehicle and driving information of a user.

2. The method according to claim 1, **characterized in that** the power information comprises:
current power of the vehicle; and
a power consumption rate of the vehicle.

3. The method according to claim 1, **characterized in that** the driving information comprises:
a vehicle usage time preference of the user;
a vehicle usage plan of the user;
and a driving behavior preference of the user.

4. The method according to claim 3, **characterized in that** the vehicle usage plan is determined based on: a schedule of the user; a trip of the user; and meeting minutes of a meeting that the user attends.

5. The method according to claim 3, **characterized in that** the vehicle usage time preference and the driving behavior preference are determined based on historical data of driving behaviors of the user.

6. The method according to claim 1, **characterized in that** the second time period is determined by the server.

7. The method according to claim 6, **characterized in that** the server is deployed based on cloud computing.

8. The method according to claim 6, **characterized in that** step b) specifically comprises:
respectively upgrading a software part of the vehicle software that concerns driving safety and a software part thereof that does not concern driving safety in different time segments within the second time period.

9. The method according to claim 6, **characterized in that** in step b), said upgrading at least comprises:
upgrading a first part of the vehicle software in a third time segment based on the update package at a first upgrade stage, and
upgrading a second part of the vehicle software in a fourth time segment based on the update package at a second upgrade stage,
wherein the third time segment and the fourth time segment are both within the second time period and do not overlap with each other.

10. The method according to claim 9, **characterized in that** the third time segment and the fourth time segment are determined by the server based on monitoring of an external environment where the vehicle is located.

11. The method according to claim 10, **characterized in that** the external environment comprises: a geographical environment and/or a traffic condition.

12. A system for upgrading vehicle software, **characterized by** comprising:
an update package download unit, which is configured to determine a first time period based at least in part on the state of communication between a vehicle and a server, and download, from the server, an update package required for upgrading of vehicle software during the first time period; and
a software upgrade unit, which is coupled to the update package download unit, and configured to determine a second time period based at least in part on power information of the vehicle and driving information of a user, and upgrade the vehicle software with the update package during the second time period.

13. A computer storage medium having computer executable instructions stored thereon, wherein the computer executable instructions implement, when executed by a processor, a method according to any one of claims 1 to 11.

14. A controller, **characterized in that** the controller carries out, when executing executable instructions stored in a memory, the steps of a method according to any one of claims 1 to 11.
